# EUROPEAN PATENT SPECIFICATION

(11) **EP 0 763 170 B1**
(45) Date of publication and mention of the grant of the patent: **24.07.2002**
(21) Application number: 94926118.4
(22) Date of filing: 05.09.1994
(51) Int. Cl.: F16H 21/18, F16H 35/02

(54) **MECHANISM FOR FEATURE IMPROVEMENT FOR BICYCLES AND OTHER CRANKDRIVEN MECHANISM**
MECHANISMUS ZUR VERBESSERUNG DER GETRIEBECHARAKTERISTIK AN FAHRRÄDERN UND ANDEREN KURBELMECHANISMEN
MECANISME PERMETTANT D'AMELIORER LES CARACTERISTIQUES DE BICYCLETTES ET AUTRES MECANISMES A MANIVELLE

(30) Priority: 06.09.1993 DK 100293
(43) Date of publication of application: 19.03.1997
(73) Proprietor: Veilberg, Steen Uffe Lawaetz, DK-8464 Galten, Herskind (DK)
(72) Inventor: Veilberg, Steen Uffe Lawaetz, DK-8464 Galten, Herskind (DK)
(86) International application number: PCT/DK94/00333
(87) International publication number: WO 95/07421

(56) References cited:
- DE-A- 3 001 630
- FR-A- 988 209
- SE-B- 342 675
- US-A- 2 020 123
- US-A- 4 583 412

## Description

The invention concerns a mechanism , as mentioned in the beginning of claim 1. A Device according to the preamble of claim 1 is known from the French patent document 988 829.

Another mechanism for transforming a rotation with constant angular velocity to a rotation with varying angular velocity concists of a chaindrive with an oval sprocket wheel. This mechanism is used for bicycles in order to pass quickly the pedal positions, which give a bad moment of the pedalcrank. It has the disadvantage, that you can neither adjust the amplitude or, nor the phase of the angular velocity.

By this invention is achieved a mechanism of the kind mentioned in the beginning, and which gives a summation of the angular velocity amplitudes for each of the two universal joints. This is achieved in this invention by the means, which are mentioned in the characterizing part of claim 1.

By the middlepart pivots, for each of the two universal joints connected up in series, thus having their axes at right angles to one another, there is achieved a summation of the angular velocity amplitudes of the universal joints, in the driven shaft, as it is also known, when the middlepart is a shaft with universal joints connected-up in series in each end, when the pivots in each end of the shaft are at right angles to one another.

The driving shaft is supplied with a pair of traversing radially directed pivots for engaging into a surrounding ring. It can be throughgoing if the other pivots of the universal joints are radially placed on rings that surrounds one another, so that the driven shaft is identical to the outermost ring.

The pivots can with advantage beat right angles to one another, as it is normal in universal joints.

The ringshaped middlepart component (4), mentioned in the claims as an adjustable component (4), which can be swing (tilted) round an axis, at right angles to the driving shaft, can, with advantage, also be suspended turnably around the very axis of the driving shaft, the amplitudephase then being adjustable.

The ringshaped middlepart is, as mentioned, connected to a part-not rotating, but swingable, whose tilting decides the amplitude.

This swingable part may include a segment of a sphere with a groove, that gives place for the driving shaft, during the swinging (adjustment).

The swinging may be controlled via radially directed pivots in connection with the sphere-segment.

The pivots can engage in a roller-path in a rotatable ball-sector, whose rotation to a location-position decides the swing. The swing movement, which controls the amplitude, can take place around bearing, whose axes are situated on ther diameter of an outerring, concentric with the driving shaft.

By rotating of this outerring, the phase of the amplitude can be adjusted.

With advantage, the mechanism may be used in a bicycle crank. So that the driving shaft has pedal- cranks on it, which will have periodically varying angular velocity, so that they pass quickly the top- and bottom positions with a short moment of pedalcrank.

In return, the pedals will then be for a longer period of time in positions with a long moment of the pedalcrank.

The mechanism may also be carried out with a driven shaft, which is extension of the driving shaft, as the ringshaped driven shaft can be extended to a solid shaft, when the driving shaft only protrudes from the mechanism to one side.

The mechanism can also be carried out on bicycle with cardan-drive, as the component (4) can be prolonged in an axial direction, which brings the two universal joints to be in extension of one another, and the driving- and driven shaft to lie parallel opposite one another, engaging by bevel gears at right angles to respectively the in- and outgoing shaft (32) for the two universal joints; the fixed component housing (44) of which part is swingable around the axes of the in-and outgoing shaft, by what means a given amplitudephase may be adjusted; see also claim 8. Profitably four engaging bevel gears can be used.

The mechanism can also be carried out by the use of balls (55) in roller-paths in stead of universal joints in bearings (see claim 9). The mechanism may, with advantage, be used in connection with a crankshaft, and also with a single universal joint and with a driving- and driven shaft at right angles to one another.

### Explanation of what is shown in the plans :

Fig. 1:
   Showing a cross-section through the mechanism, mounted in the crankhousing of a bicycle. The figure is aimed to be shown on a scale of 1:1. The drive shaft - the crank (1) has , placed opposite and at right angles on it, pivots (6) inbedded in bearings in a surrounding spherical ring (3). In the ring, 90° from the bearings, there are placed two diametrically opposite pivots (7), which are also inbedded in bearings in an adjustable component (4), being the variably adjustable part. The component (4) also has two diametrically opposite pivots (8) placed 90° from the bearings of the pivots (7). The pivots (8) are inbedded in bearings in an outer ring (5), which has, staggered 90° from the bearings of the pivots (8), two diametrically opposite pivots (5'), which are inbedded in an outer cylindrical ring (2), (and) being also the driven shaft with the sprocket wheel, in which the shaft (1), the crankshaft is inbedded co-axially in a bearing (62). The ring (2) is suspended in an outer bearing (63), which is placed in the innerwall of the crankhousing (23). The drive shaft (1) is, at the opposite end of the shaft, where it goes through the endwall of the crankhousing (64), inbedded in a bearing herein (65). The mentioned adjustable component (4) has along the edge of the circumference, an outer bearing (9), which, placed within a part, (shaped as) a domeshell, shaped as a segment of a sphere (10), causes the ring (4) to be able to rotate in the domeshell, which has in addition an open groove (14), allowing it to tilt/turn around an axis of bearings (17), at right angles to the shaft (1) and thereby change its angular position compared to it.
   The domeshell (10) is able to turn/tilt by being fastened (15) to a controlpart (16), protruding from the outside of the domeshell and stretching out round the rings (2) and (5), and being placed , by diametrically opposite bearings (17), in an adjustable outerring (18). The part (16), consisting of two semicircular bifurcations, has, placed on the middle of the two arcs of circle, two pivots (11), which engage in a rollerpath (24) in an outer shell-mould shaped as a ball-sector (25), which, along the edge of the hole circumference, is suspended in a bearing (26).
   A turn around its own axis by wiredrive (27) in a rollerpath (66), will bring the herein - by pivots (11) in a rollerpath (24) - guided domeshell (10) to tilting/changing its angular position, and because of the cohesion of the adjustable component (4) and the domeshell (10) by a bearing, a change of angle takes place between the rings (3, 5) and the ringshaped adjustable component (4) by which means the angular velocity of the shaft (1) will vary periodically, when the ring (2) has a constant angular velocity.
   The adjustable outerring (18), in which the part (16) is inbedded by pivots (17), can be turned around its axis along with the part (16) whereby the phase of the periodical angular velocity can be changed.
Fig. 2: Showing the part (16) and rollerpath (24) in ball-sector (25), partly separated.
Fig. 3: Showing the rollerpath (24) in the ball-sector (25), and the rollerpath (66) mounted on it, for wiredrive (27) for the turning of the ball-sector (25).
Fig. 4: Showing a sectional view A-A in fig. 2 of the part (16); the groove opening (14) for the through-fare of the shaft (1) can be seen.
Fig. 5: A part from the changes mentioned below it shows the same as appears from fig. 1. Wanting a smaller width of the crank, the axial extension of the ball-sector (25.1.) is reduced. The pivots (13), same as (11) in fig. 1, are, on account of the groove (14), displaced compared to the middle of the arcs of circle, where they are placed on the control part (16.1), which is reduced and altered compared to the control part (16) in fig. 1. The bearing (65) of the crankshaft (1) is replaced by a bearing (67), inbedded in the innerwall of the crankhousing (23.1).
Fig. 6: Showing specific details of parts from fig. 5, respectively the development of the pivots (13) and their position in the ball-sector (25.1), as well as their rollerpath (24.1) in the ball-sector. The parts are taken apart axially.
Fig. 7: Showing specific details of parts from fig. 5 and fig. 6, respectively the rollerpath (24.1) of the pivots (13), and the mounted rollerpath (66) for wiredrive (27) for the turn of the ball-sector (25.1)
Fig. 8: Showing a sectional view A-A of fig. 6 without the ball-sector (25.1). The groove opening (14) for the throughfare of the shaft (1) can be seen. The controlpart (16.1), protruding from the top of the domeshell (10) is to be seen, as well as its fastening area (15) on the domeshell, shown in secret outline, can be seen in fig. 17, 18, 19.
Fig. 9: Showing a sectional view B-B of fig. 6. The hatched area within the domeshell (10), which can be seen in fig. 5, is not drawn in the sectional view, as the massive area is not neccessarily needed, (14) shows the open groove through the domeshell (10) for the throughgoing shaft (1).
Fig. 10: Showing a sectional view B-B of fig. 13. The open groove (14) through the domeshell (10) is seen, as well as the fastening area (15) for the protruding controlpart (16).
Fig. 11: Showing a sectional view A-A of fig. 1, as it will appear, if the rings (3, 5) and the ringshaped adjustable component (4) are turned, so that their centre planes are coaxial and are at right angles to the shaft (1). The controlpart (16) is suspended in bearings (17) on an outerring (18), concentric with the ingoing shaft (1).
   The bearings (17) have their mutual axis on a diameter of the ring (18). the ring can be turned by wiredrive. By the turn, the amplitudephase for the angular velocity is changed. In order to be able to make a turn, the pawls (21)- which hold the ring in proportion to the housing (23) by gearing into longitudinally directed teeth in the housing - must be released. This takes place by drawing a wire (19) fastened to a spring-ring (20), which runs through the pawls in a groove (22) and through a groove (22), going round in the outside of the outerring (18).
   Next to this groove, another groove with less depth runs through the pawls and in the outside of the ring (18).
   The two grooves have a different bottom rake of the pawls, and the last mentioned groove contains a spring ring (20.1) serving to affect the pawls to engaging.
   Sectional view C-C is a cross-section through the ring (18) with the two grooves of different depth.
   In the middle of the circular cross-section is seen a pawl with springrings, viewed radially from the outside.
   There are pawls (21) and (21'), which keep the ring (18) from rotation in either direction.

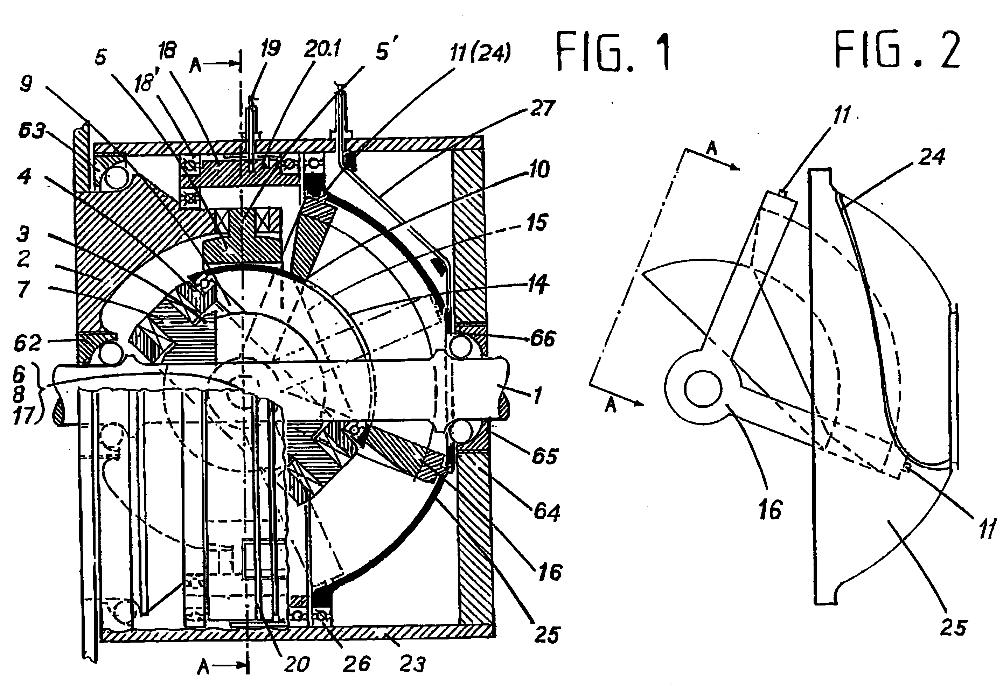

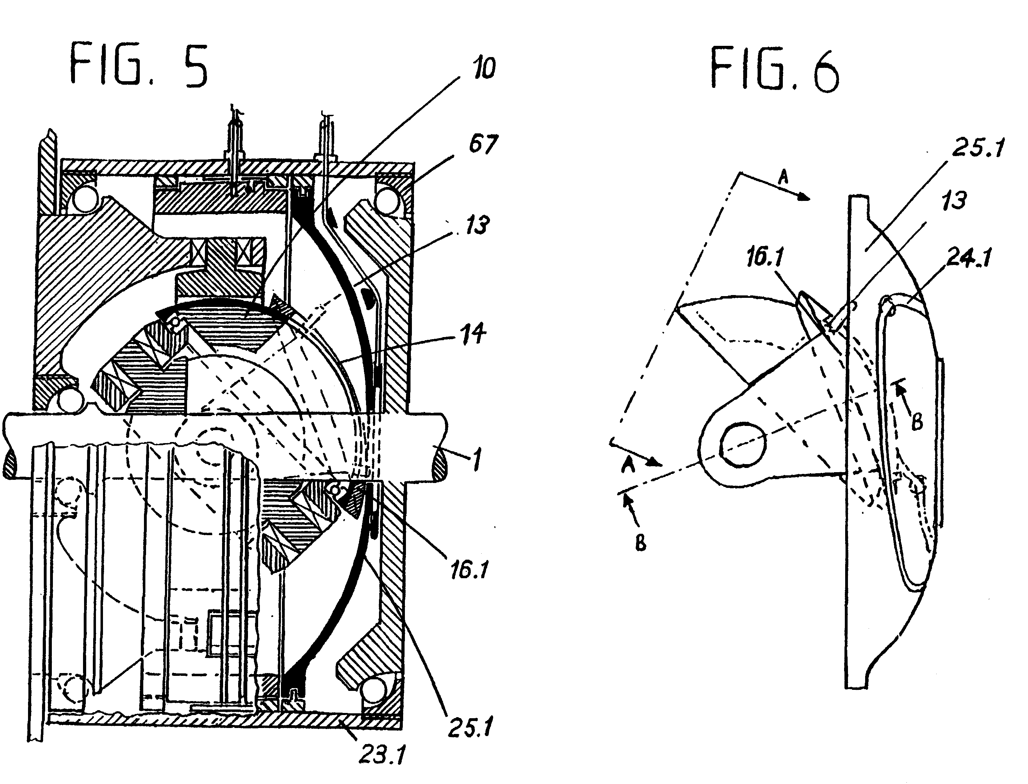

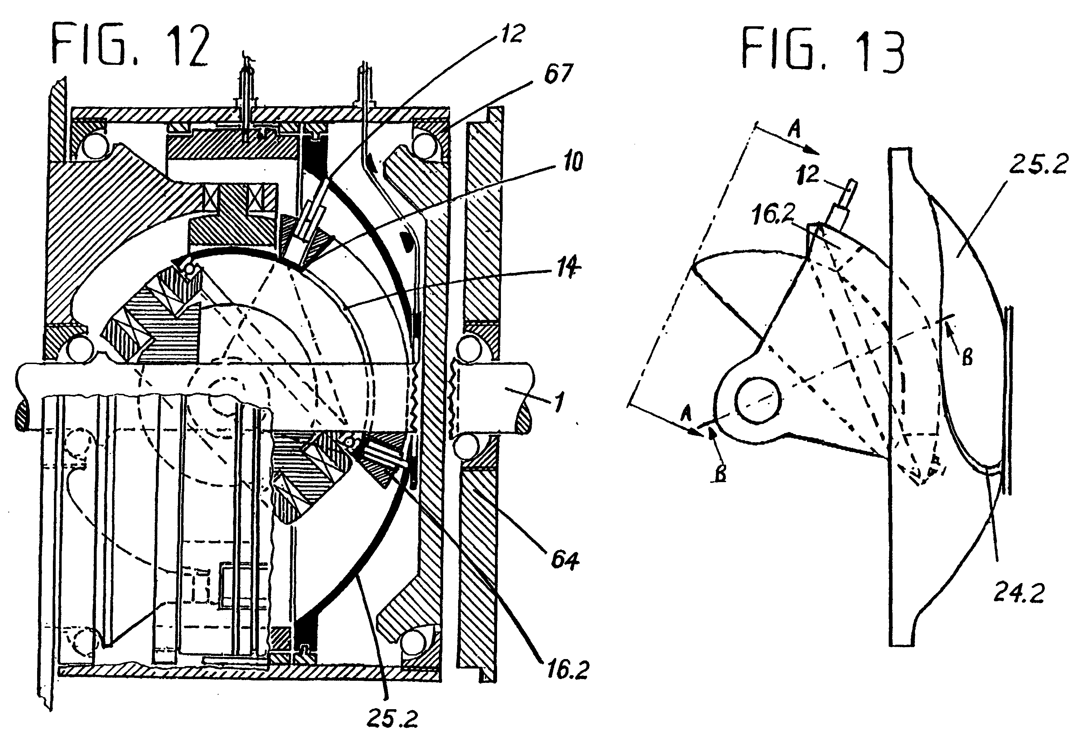

Fig. 12: Showing the same as fig. 1 and 5. As in fig. 5 the width of the crank is made smaller compared to fig. 1. The pivots (12), corresponding (11) in fig. 1, are placed at each their end of the groove-opening (14) and have a telescopic function.

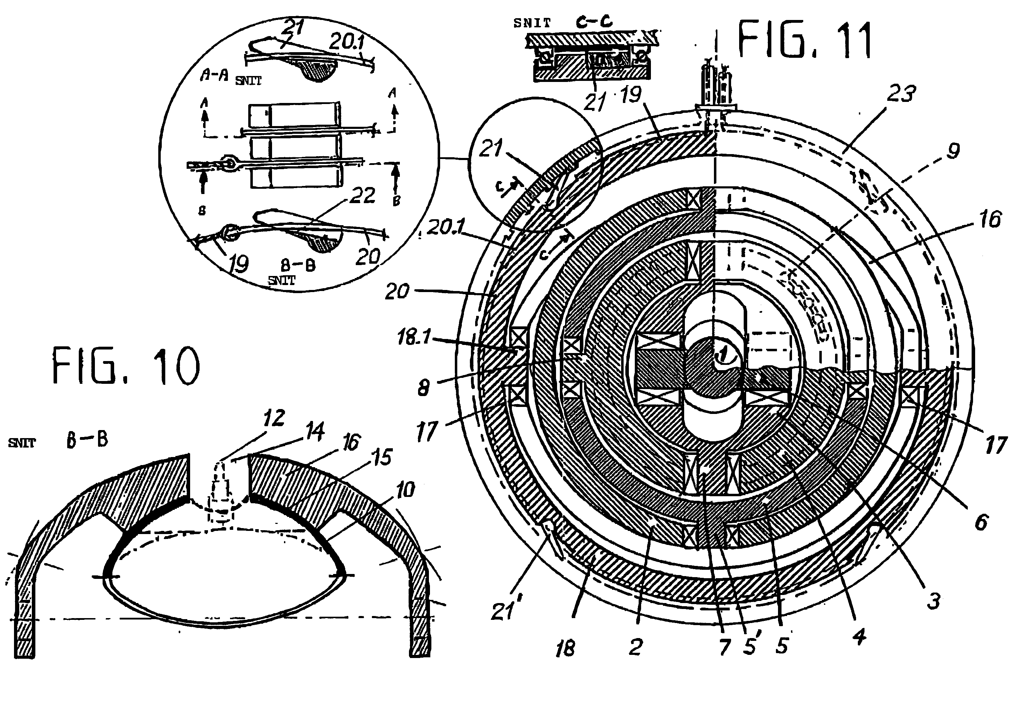

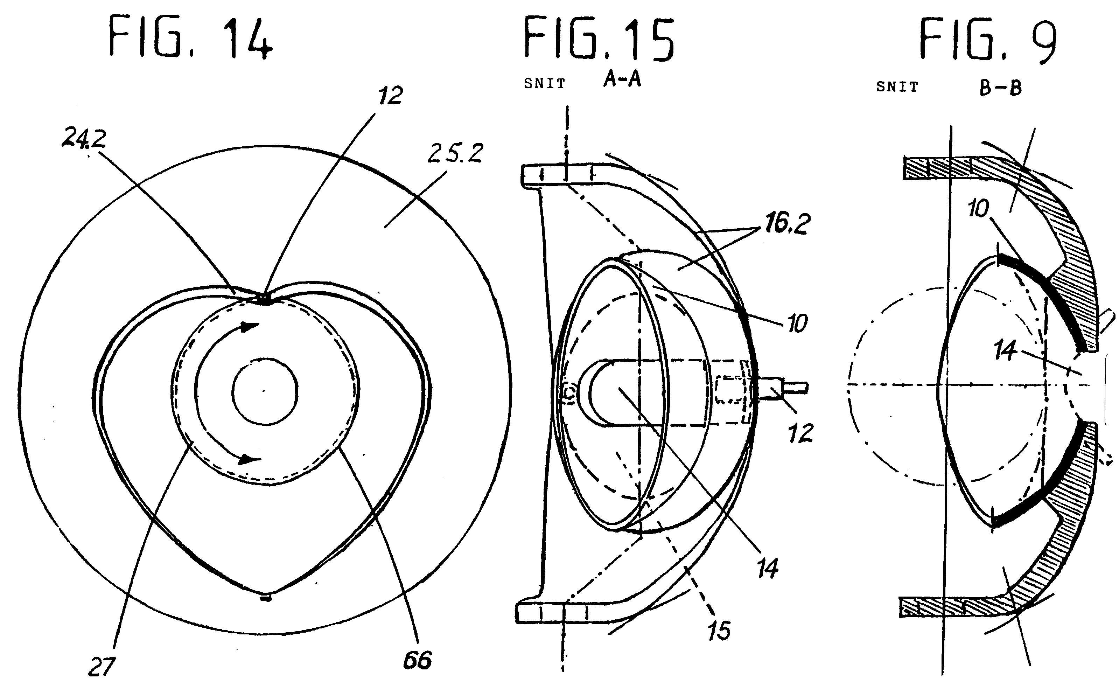

Fig. 13: Showing specific details of parts in fig. 12, respectively the rollerpath (24.2) of the pivots (12) and the direction of a sectional drawing viewed A-A, which can be seen in fig. 15. Moreover is shown through-sectional view B-B, which can be seen in fig 10.
Fig. 14: Showing specific details of parts in fig. 12 and fig 13 seen from the end. Respectively the rollerpath (24.2) of the pivots (12) in the ball-sector (25.2) and, mounted on it, the rollerpath (66) for wiredrive (27) for the turn of the ball-sector.
Fig. 15: Showing a sectional view seen A-A of fig. 13 , without the ball-sector (25.2).
   The grooveopening (14) for the throughfare of the shaft (1) can be seen. The part (16.2) protruding from top of the domeshell (10) is seen, and the fastening area (15) of the protruding part (16.2), see fig. 10, 16, 17, 18, 19.

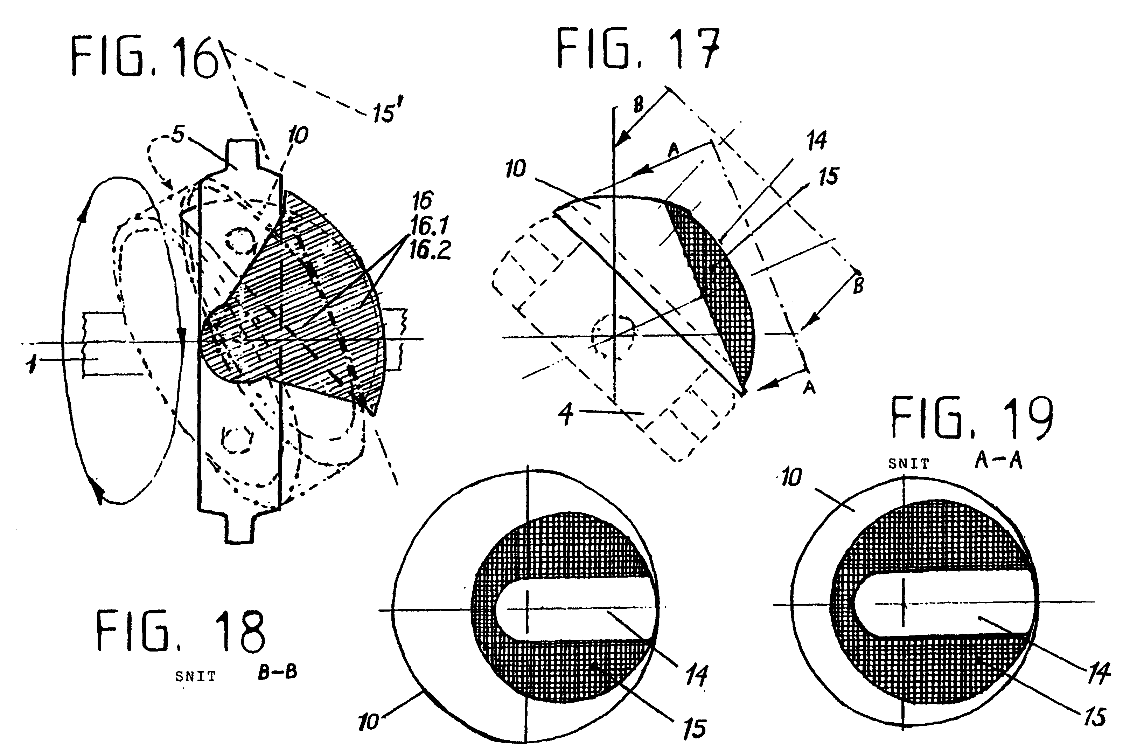

Fig. 16: Showing, with dotted line, the location positions of the ring (5), when it makes 1/8 and 3/8 of one rotation round. The line (15) indicates a plane, to the right of which the domeshell (10) has a free area (15) which is not overlapped by the ring (5).
Fig. 17: Showing the fastening area (15) (of the protruding controlpart (16)), as well as the domeshell (10).
Fig. 18: Showing a sectional view B-B of fig. 17. The grooveopening (14) for the throughfare of the shaft (1) and the fastening area (15) on the domeshell (10).

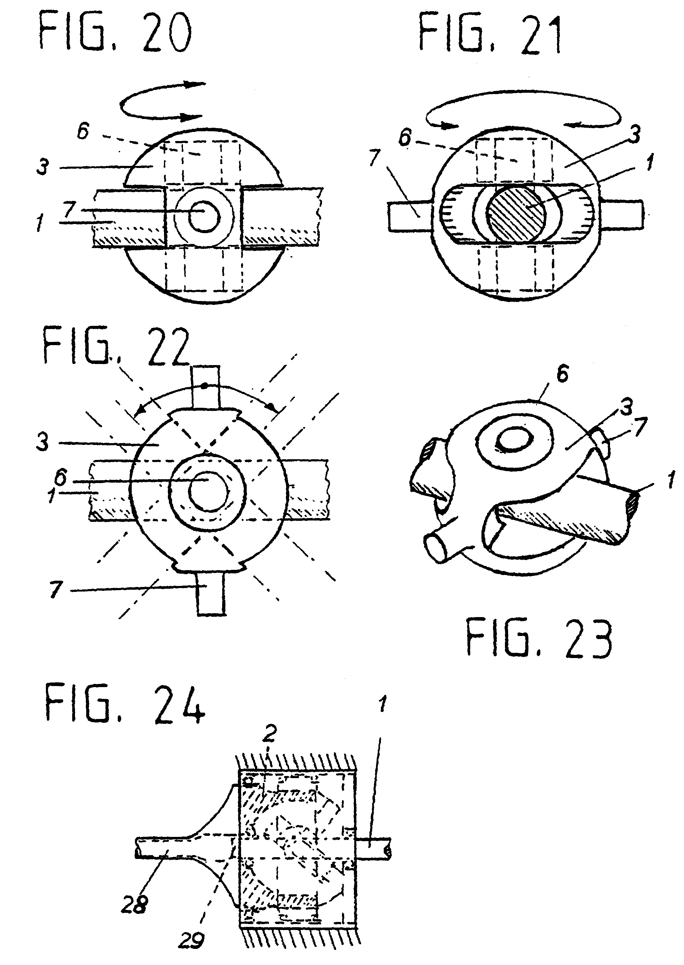

Fig. 19: Showing a sectional view A-A in fig. 17.
Fig. 20: Showing the shaft (1) being combined, by pivots (6) with the ring (3), which has pivots (7) at right angles to the pivots (6).
   The ring (3) is, in order to increase strength, extended to include as much of a spherical shape as the relative motion allows.
Fig 21: Showing the parts in fig. 20, seen from the end of the shaft (1).
Fig. 22: Showing the parts in fig. 20, seen from above. The possible angular change of the shaft (1) compared to the ring (3) is shown with dotted line.
Fig. 23: Showing the parts in fig. 20, 21, 22 in perspective.
Fig. 24: Showing a form of construction, where the driving shaft (1), which can be a crankshaft, is not throughgoing in the mechanism, so the ringshaped driven shaft, in extension, may be connected to a solid outgoing shaft (28).

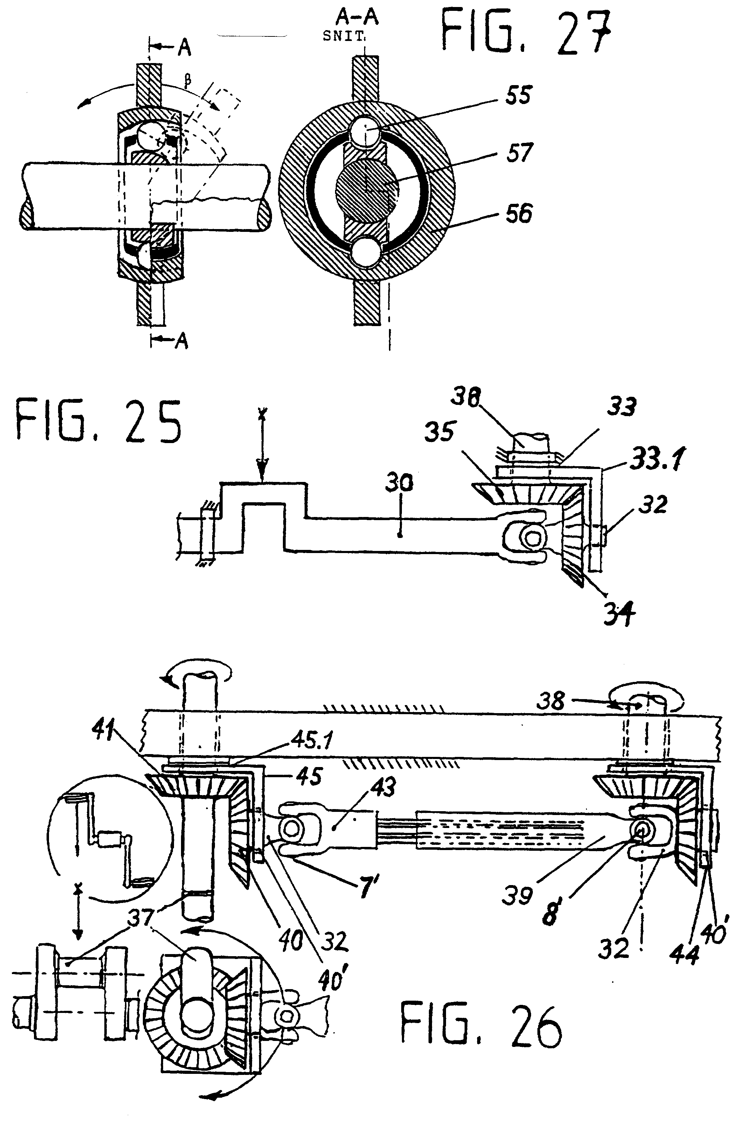

Fig. 25: Showing a crankshaft (30) being connected with an universal joint, and having the top of its crank (joggling) on a level with the ingoing axis of the pivots in the universal joint. The adjustable shaft (32) of the universal joint is at the right angles engaging with the driven shaft (38) by means of bevel gears (40, 41) suspended turnably (45.1) in a housing (44) around the driven shaft.
Fig. 26: Showing a driving shaft (37) aand a driven shaft (38) lying parallel opposite oneanother, each shaft being jointed and rotating in bearings (40', 45.1) engaging at right angles by bevel gears (40,41), which are mounted in a housing (44, 45) turnable (45.1) around respectively the driving- and driven shaft, by what a turning of the bearinghousing (45) around the driving shaft (37). The intermediate shaft (39) can be pushed out to a splineshaft (43) mentioned in the claims as an adjustable component (39, 43). With the advantage of a minimum loss of friction four engaging bevel gears, placed opposite oneanother, can be used, as it is known from a type of planetary gear.
Fig. 27: Showing a form of construction, where balls (55) are used instead of pivots between the shaft (57) and the outer ring (56). Likewise, there can be balls between the ring (56) and an outer ring on it. On the shaft (57) the two balls (55) are diametrically placed and movable around an axis, at right angles to the shaft in rollerpaths on the plane of the longitudinal direction of the shaft.

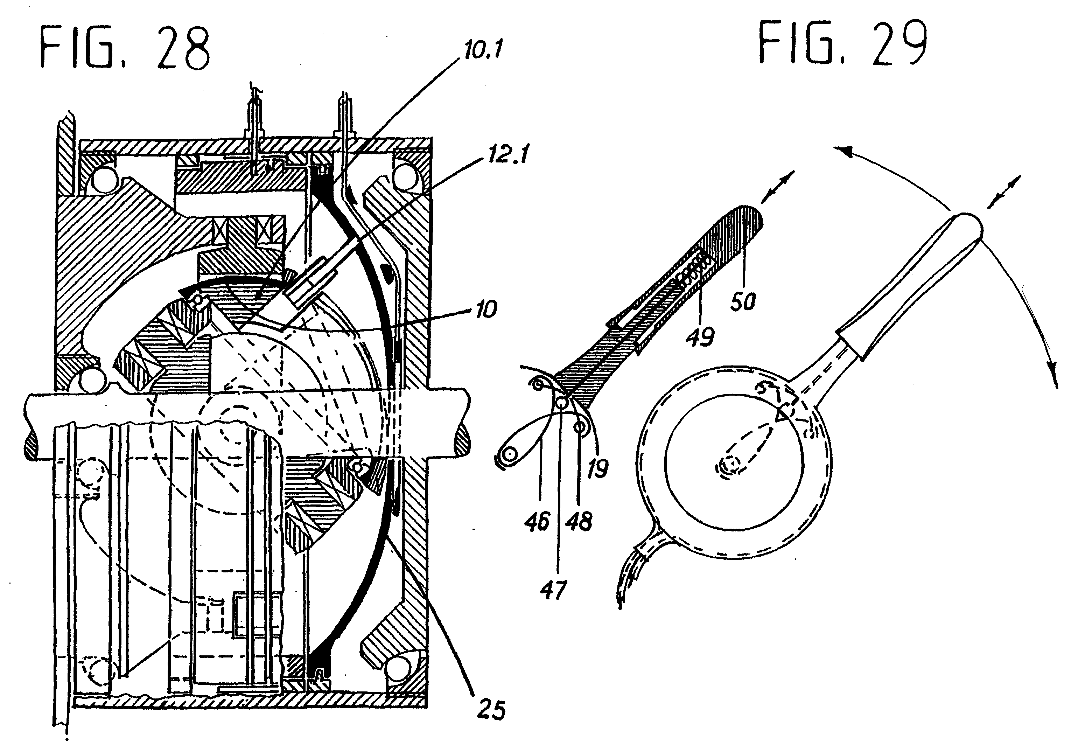

Fig. 28: Showing that it is sufficient with only one pivot (12.1) engaging in a rollerpath. The domeshell (10) can be partly solid (10.1).
Fig. 29: Showing a manual control-handle to control the turning of the ring (18) and to release the pawls (21), see also fig. 11. The wire (19) is used for both functions. The two ends of the wire are laid, each their way around a. wirewheel in the manual control-handle and fastened (48) to the two ends of a shear-shaped bandspring (46).
   The activation part (50) of the manual control-handle can be shifted in the longitudinal direction against a spring (49), by what means a roller (47) affects the band-spring (46) so that the wire is pulled/shortened, and the pawls (21) released. Then, by turning the manual control-handle, the two wire-ends, where coming out from the handle, are displaced in each their direction, so that the ring (18) is turned.

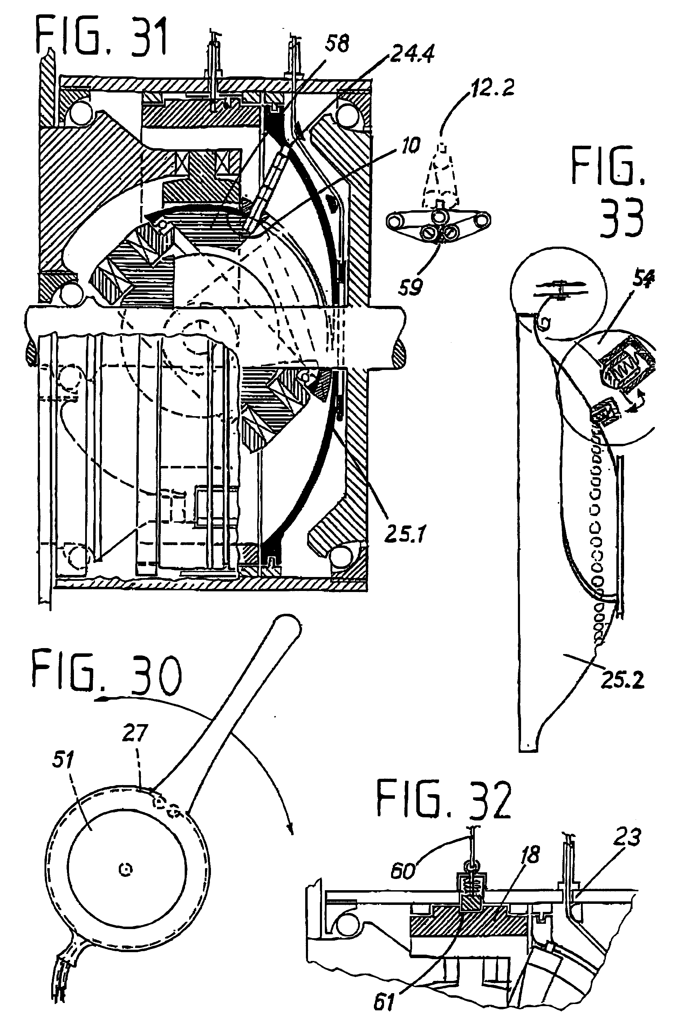

Fig. 30: Showing a manual control-handle with a wirewheel with frictional resistance (51) for maneuvering the wire, that controls the turning of the ball-sector (25) and with that, the swing of the domeshell (10) and the adjustment of the angular velocity-amplitude.
Fig. 31: Showing a pivot (12.2) consisting of links, of which two have a toothed rim-engagement (59). The length of the pivot is changed by the movements of the links.
Fig. 32: Showing a retaining of the outer ring (18) by means of a pivot, engaging into holes in the ring. The pivots can be released by a wire (60). As long as the ring (18) is not retained, it may be turned by moving along during pedalactivation.

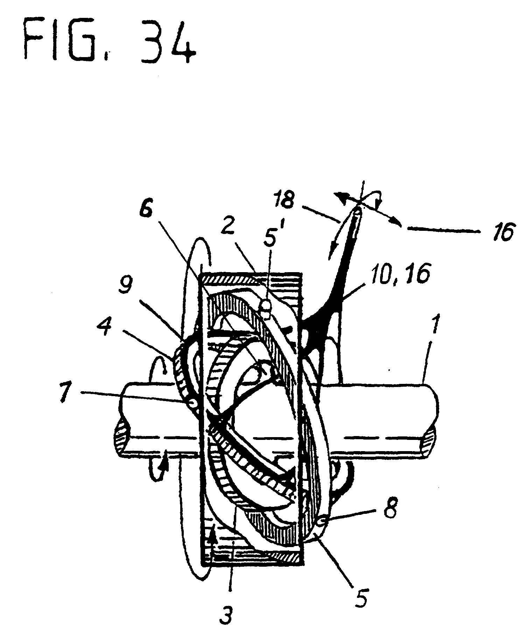

Fig. 33: Showing that the ball-sector, instead of being retained/kept from rotating by wireconnection, may be retained by a springloaded pivot (54).
Fig. 34: Showing a basic design of the main elements of the mechanism.

### Figure List.

Fig.1: Showing a cross-section through the mechanism, used here in a bicycle crank.

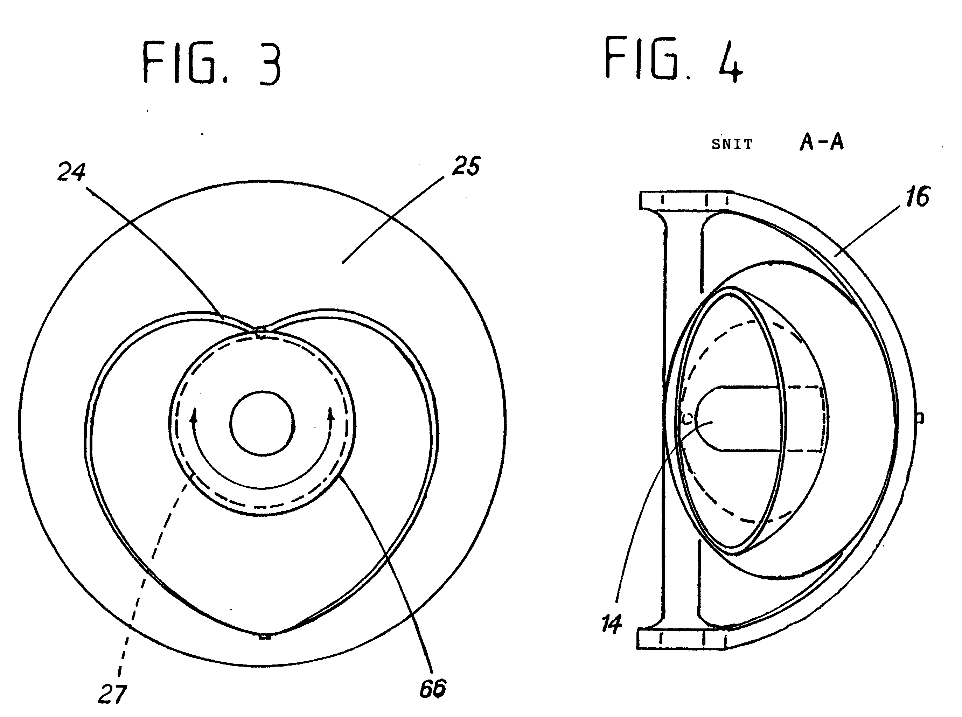

Fig. 2-4: Showing specific details of parts in fig. 1.
Fig. 5: Showing an altered form of construction of the mechanism.

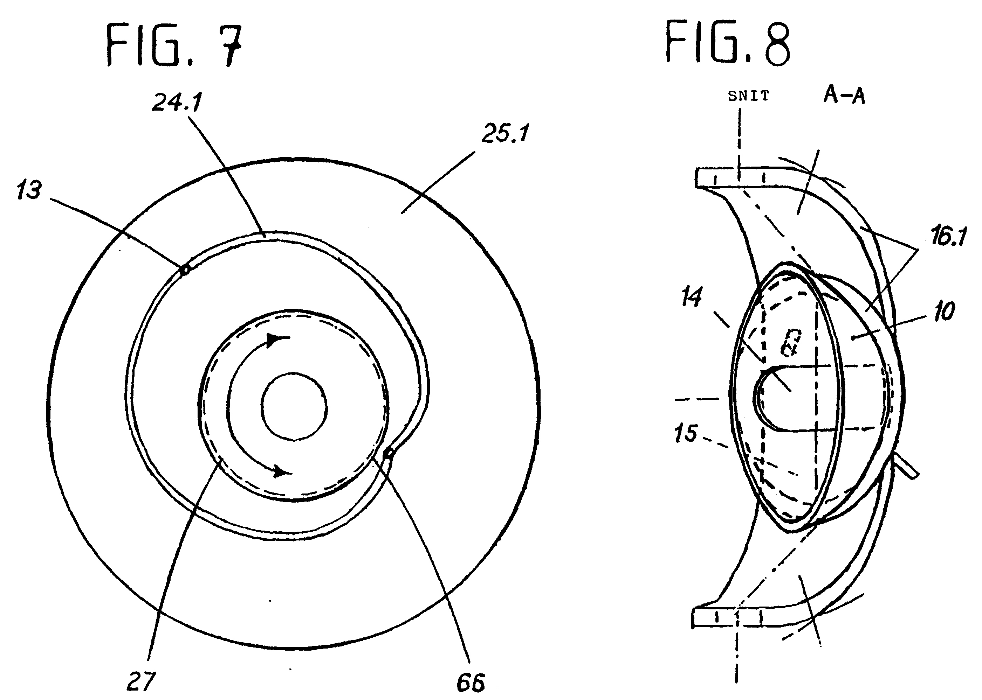

Fig. 6-9: Showing details of parts in fig. 5.
Fig. 10: Showing a sectional view B-B of fig.13.
Fig 11: Showing a sectional view transversely to the driving shaft of the mechanism in fig. 1, as it will appear, when the ingoing rings are on the same level and the angular velocity-amplitude is zero.
Fig. 12: Showing an altered construction of the mechanism with telescopic steering pivots.
Fig. 13-15: Showing details of parts in fig. 12.
Fig. 16: Showing a plane (15'), to the right of which a controlpart can be fastened to the non-rotating part of the bearing, whose swing/adjustment decides the amplitude of the angular velocity.
Fig. 17: Showing the non-rotating part, shaped as a domeshell.
Fig. 18-19: Showing a sectional view in fig. 17.
Fig. 20-23: Showing the shaft, (1) with the ring (3).
Fig. 24: Showing a special form of construction, where the driveshaft (1) and the driven shaft (28) are in extension of oneanother.
Fig. 25: Showing a simplified possible device with a universal joint and with the driving -and driven shaft at right angles.
Fig. 26: Showing a carrying out of the mechanism with a universal shaft-drive, and the in- and outgoing shaft lying parallel opposite oneanother and an intermediate part, which is prolonged in an axial extension.
Fig. 27: Showing a form of construction, where balls are used instead of pivots, as the first universal joint.
Fig. 28: Showing an altered construction of the mechanism with only one telescopic steering pivot.
Fig.29: Showing a handle for controlling the phase of the angular velocity-amplitude by turning of an outer ring by wiredrive.
Fig. 30: Showing a manual control-handle to adjust the dimension of the angular velocity-amplitude.
Fig. 31: Showing a different form of steering pivot with variable length, built up by links.
Fig. 32: Showing a retaining of the outer ring, which can be turned by the manual control-handle of fig. 29.
Fig. 33: Showing, that a springloaded pivot may retain the dome-shell, the turning of which taking place by means of the manual control-handle, of fig. 30.
Fig. 34: Showing a basic design of the main elements.

## Claims

1. A mechanism having a driving shaft (1;37;57) and a driven shaft (2;28;38) to transform a rotation with constant angular velocity to a rotation with periodically varying angular velocity, comprising:
- two heterokinetic universal joints connected up in series and
- an adjustable component (4;39,43) which is an output element of the one universal joint and an input element of the other universal joint,
- the axis of said adjustable component is arranged so as to swing to an angular position compared to the driving and the driven shaft, so that the periodical angular velocity of one of these shafts is adjustable be tween a maximum amplitude and a zero amplitude, whereby
- said adjustable component has radially directed pivots (8;8') or bearings for pivots (7;7') which are part of the second and the first universal joint,
- said adjustable component is the rotating part of a bearing (9;40') whose non-rotating part (10,16; 44,45) is suspended swingably in bearings (17;45.1) in order that the adjustment can be carried out,
- actuating means are provided by means of which the axes of said pivots (8;8') or bearings for pivots (7;7') for the second and the first universal joint are orientated at an angle from one another, of up to and including 90°, at the same time as the pivot axes of each universal joint are separately turned to a mutual angle from one another, which may profitably be 90°, so that the angular velocity amplitudes of the two universal joints are summed up, **characterized in that** said driven shaft (2;28;38) does not go through the said adjustable component (4;39,43).

2. Mechanism, according to claim 1, **characterized in that** the driving and driven shafts are coaxial to one another, the driving shaft (1) goes through the driven shaft and carries radially directed pivots (6) or balls (55), which are combined with a surrounding ring (3;56), which in turn carries said radially-directed pivots (7), which in turn are combined with said adjustable component (4) being said means in the form of a surrounding ring-shaped middle-part component (4) as the pivots (8) and bearing for pivots (7) are directed at right angles to one another, whereby the pivots (6,7) are directed at right angles to one another and are part of the first universal joint; said adjustable component (4) is combined via said radially directed pivots (8) with a surrounding ring (5), which is combined via radially directed pivots (5') with a surrounding ring (2) being said driven shaft, whereby the pivots (8 and 5') are directed at right angles to one another and are part of the second universal joint.

3. Mechanism according to one of the preceding claims, **characterized in that** said non-rotating part (10, 16) of said bearing (9) is suspended swingably via said bearings (17) around the axis of the driving shaft and around the driven shaft via bearings (18') on an outer ring (18) which is concentric to the driving shaft and stretches out round the driven shaft and said non-rotating part; said outer ring (18) can be turned via said actuating means being in the form of a wire- drive (19) so that a phaseshift of the amplitude can be adjusted, and said outer ring (18) is retained by means of pawls (21) engaging in grooves (22) provided in a surrounding cylindrical and stationary housing (23).

4. Mechanism according to claim 3, **characterized in that** said non-rotating part (10,16) of the bearing (9) includes a dome-shell (10) with
- a free area (15) which is not overlapped by the surrounding ring (5), which free area is a fastening area for a protruding part (16) of the non-rotating part so constituting said actuating means, and comprising
- a groove-opening (14), said dome-shell is supplied with one or more radially directed pivots (11,12,12.1,13) placed in the centre plan of the groove-opening or next thereto.

5. Mechanism according to claim 4, **characterized in that** said dome-shell pivots are in engagement with a roller-path (24,24.1,24.2,24.4) provided in a ball-sector (25, 25.1) which is concentric with the input shaft (1) and tumable there around by means of a wire (27) in a controlled manner, and which stretches out round said non-rotating part.

6. Mechanism according to one of the claims 2-5, **characterized in that** the ring (2) extends to a solid end (28) forming the driven shaft opposite to the driving shaft (1), the end of which is accommodated in the ring (2, figure 24).

7. Mechanism according to one of the precedent claims, **characterized in that** the ring (3) is enlarged to a spherical shape in order to obtain an increase of strength.

8. Mechanism according to claim 1, to be used with a cardan shaft- drive,
**characterized in that** the driving and driven shaft (37,38) lie parallel to one another, each shaft is connected via right-angled meshing bevel gears (40,41) to the universal joint, said bevel- gears (40,41) are suspended in a turnable bearing-housing (45,44) respectively around the driving and driven shaft, so that an adjustment of periodically varying angular velocity and a phase displacement of the amplitude can be carried out between the shafts (37,38), whereby the phase displacement is carried out by turning the bearing-housing (45) around the driving shaft (37) and whereby the adjustable component is a spline-shaft (39,43,figure 26), advantageously there may be used four engaging bevel gears placed opposite one another.

9. Mechanism according to claim 2, **characterized in that** the driving shaft (57) is combined with said surrounding ring (56) via two dia- metrically placed balls (55) in roller-paths transversely to the peripheral directional plan of the ring and 90° displaced on the ring (56), the alteration only goes for the cohesion between the driving shaft and the ring and likewise balls between the ring and an outer ring on it, whereby on the driving shaft said balls can move in the longitudinal direction of the driving shaft (figure 27).

10. A mechanism having a driving crank shaft (30) and a driven shaft (38) suspended at right angles to one another and to transform a rotation with constant angular velocity to a rotation with periodically varying angular velocity, comprising one universal joint connecting the crank shaft (30) to an adjustable shaft (32) being an output element of said one universal joint and being variably adjustable by turning a housing (33.1) of a bearing (33), so that the axis of said adjustable shaft can swing to an angular position compared to the driving and the driven shaft, so that the periodical angular velocity of the driven shaft is adjustable between a maximum amplitude and a zero amplitude, whereby a first bevel gear (34) is fixed to said adjustable shaft (32), said first bevel gear (34) meshes with a similar second bevel gear (35) fixed to the driven shaft and arranged at right angle to the first bevel gear, whereby said adjustable shaft has radially directed pivots which are part of the universal joint, and whereby the adjustment is carried out by actuating means with which said housing (33.1) and thus the axle of said adjustable shaft of the universal joint can be turned.

## Patentansprüche

1. Mechanismus mit einer Antriebs- (1; 37; 57) und einer Abtriebtswelle (2; 28; 38) und um eine Rotation mit einer konstanten Winkelgeschwindigkeit in eine Rotation mit periodisch variierender Winkelgeschwindigkeit umzuwandeln, bestehend aus:
zwei seriengekoppelten heterokinetischen Kreuzgelenken und einer justierbaren Komponente (4; 39; 43), welches das Ausgangselement (Teilwelle) für das eine Kreuzgelenk und das Eingangselement (Teilwelle) für das andere Kreuzgelenk ist, die genannte justierbare Komponente ist so angebracht, dass dessen Welle im Winkel im Verhältnis zur Antriebs- und Abtriebswelle schwingen kann, wobei die periodische Winkelgeschwindigkeit einer der Wellen zwischen einer maximalen Amplitude und der Amplitude 0 justiert werden kann, in dem die genannte justierbare Komponente radial gerichtete Drehzapfen (8; 8') hat oder Lager für Drehzapfen (7; 7'), welche Teile der ersten und zweiten Kreuzgelenke sind,
genannte justierbare Komponente ist das rotierende Teil eines Lagers (9; 40'), dessen nicht rotierendes Teil (10, 16; 44, 45) schwingbar in einem Lager gelagert ist, so dass die Justierung ausgeführt werden kann,
Antriebsmittel sind durch Mittel ausgeführt, bei welchen die Wellen für die genannten Drehzapfen (8; 8') oder Lager für Drehzapfen (7; 7') für das erste und zweite Kreuzgelenk in einem Winkel bis zu 90 grad zu einander gedreht sind,
gleichzeitig damit dass die Drehzapfenwellen für jedes Kreuzgelenk in einem Winkel zu einander gedreht sind, der vorzugsweise 90 grad sein kann, so dass die Winkelgeschwindigkeitsamplituden der beiden Kreuzgelenke summiert werden, **dadurch gekennzeichnet**, das die genannte Abtriebswelle (2; 28; 38) nicht durch die genannte justierbare Komponente (4; 39, 43) hindurchgeführt wird.

2. Mechanismus nach Anspruch 1, **dadurch gekennzeichnet, dass** die Antriebs- und Abtriebswelle koaxial zu einander sind, die Antriebswelle ist durch die Abtriebswelle hindurchgeführt und mit Hilfe von angebrachten, radial ausgerichteten Drehzapfen (6) oder Kugeln (55), mit einem umschliessenden Ring (3;56 ) verbunden, so wie bei dem radial ausgerichteten Drehzapfen (7), ist mit der genannten justierbaren Komponente (4) verbunden, welche die genannten Mittel in Form einer umschliessenden ringförmigen Mittelteil-Komponente (4) sind, in dem die Drehzapfen (8) und die Lager der Drehzapfen (7) im rechten Winkel zu einander ausgerichtet sind und Teil des ersten Kreuzgelenkes sind; die genannte justierbare Komponente (4) ist am radial ausgerichteten Drehzapfen (8) mit einem umschliessenden Ring (5) verbunden, wie bei den radial ausgerichteten Drehzapfen (5') mit einem umschliessenden Ring (2) verbunden, welche die genannte Abtriebswelle bildet, da die Zapfen (8 und 5') im rechten Winkel zu einander angebracht sind und Teil des zweiten Kreuzgelenkes sind.

3. Mechanismus nach eines der vorhergehenden Ansprüche, **dadurch gekennzeichnet, dass** der nicht rotierende Teil (10,16) des genannten Lagers (9) schwingbar in Lager (17) um die Achse der Antriebswelle und um die Achse der Abtriebs-welle im Lager (18') auf einem Aussenring (18) gelagert ist, der konzentrisch mit der Antriebswelle ist und der sich aussen um die Abtriebswelle und das nicht rotierende Teil streckt; der genannte Aussenring (18) kann durch die genannten Antriebsmittel in Form von Drahtseilzügen (19) rotiert werden, so dass eine Phasendrehung der Amplitude eingestellt werden kann, und der genannte Aussenring (18) wird mittels Sperrklinken (21) fixiert, welche in Rillen (22) eingreifen,. die in einem umschliessenden, zylindrischen, stationären Gehäuse (23) angebracht sind.

4. Mechanismus nach Anspruch 3, **dadurch gekennzeichnet, dass** das genannte nicht rotierende Teil (10, 16) des Lagers (9)Teil einer Kuppelschale (10) mit einer freien Fläche (15)ist, welche nicht von dem umschliessenden Ring (5) überstrichen wird, dessen freie Fläche die Befestigungsfläche des herausragenden Teils (16) des nicht rotierenden Teils ist, welche die genannten Antriebsmittel bilden, und eine Rillenöffnung (14) umfassen, die genannte Kuppelschale ist mit einem oder mehreren, radial ausgerichteten Drehzapfen (11, 12, 12.1, 13) versehen, die sich entweder in der mittleren Ebene zur Rillenöffnung oder neben dieser befinden.

5. Mechanismus nach Anspruch 4, **dadurch gekennzeichnet, dass** die Drehzapfen der genannten Kuppelschale Eingriff in eine Laufbahn (24, 24.1, 24.2, 24.4) haben, welche in einer Kugelscheibe (25, 25.1) angebracht ist, die konzentrisch mit der Antriebswelle (1) ist und mittels eines Drahtseilzuges (27) kontrollierbar um die Antriebswelle (1) rotierbar ist, und sich aussen um das genannte nicht rotierende Teil streckt.

6. Mechanismus nach eines der Ansprüche 2 - 5, **dadurch gekennzeichnet, dass** der Ring (2) zu einem massivem Ende (28) hin verlängert wird, welches die Abtriebswelle gegenüber der Antriebswelle (1) bildet, die mit der Lagerung im Ring (2, fig. 24) endet.

7. Mechanismus nach eines der vorhergehenden Ansprüche, **dadurch gekennzeichnet, dass** der Ring (3) zu einer umfassenden Kugelform ausgeweitet wird, um eine höhere Stärke zu erreichen.

8. Mechanismus nach Anspruch 1, zur Anwendung bei Kardanwellenantrieb, **dadurch gekennzeichnet, dass** die Antriebswelle (37) und die Abtriebswelle (38) parallel zu einander liegen, jede Welle ist mit konischen Zahnrädern (40, 41) rechtwinklig im Eingriff und mit einem Kreuzgelenk verbunden, die genannten Zahnräder (40, 41) sind in einem drehbaren Lagergehäuse (45, 44) jeweils um Antriebswelle und Abtriebswelle gelagert, so dass eine Justierung der periodischen Winkelgeschwindigkeit, und eine Phasenverschiebung der Amplitude zwischen den Wellen (37, 38) durchgeführt werden kann, da die Phasenverschiebung durch Drehung des Lagergehäuses (45) um die Antriebswelle (37) bewirkt wird und da die justierbare Komponente eine Nutenwelle (39, 43, fig. 26) ist, es können vorteilhaft vier konische in einandergreifende Zahnräder verwendet werden.

9. Mechanismus nach Anspruch 2, **dadurch gekennzeichnet, dass** die Antriebswelle (57) mit den genannten umschliessenden Ring (56) mit zwei diametralt angebrachten Kugeln (55) in Laufbahnen quer zur mittleren Ebene und um 90 grad verschoben auf dem Ring (56) verbunden ist, die Änderung gilt nur für den Zusammenhang zwischen Antriebswelle und Ring, und dem entsprechend den Kugeln zwischen dem Ring und dem anliegendem äusserem Ring, da die genannten Kugeln in Längsrichtung auf der Antriebswelle bewegt werden (fig. 27).

10. Mechanismus mit einer treibenden Kurbelwelle (30) und einer Abtriebswelle (38) rechtwinklig gelagert, und um eine Rotation mit konstanter Winkelgeschwindigkeit in eine Rotation mit periodisch variierender Winkelgeschwindigkeit umzuwandeln, bestehend aus einem Kreuzgelenk, das die Kurbelwelle (30) mit einer justierbaren Welle (32) verbindet, die das Ausgangselement des genannten Kreuzgelenkes bildet und welches durch Drehen des Gehäuses (33.1) um das Lager (33) variabel justiert werden kann, wobei die Achse der justierbaren Welle im Winkel zwischen Antriebswelle und Abtriebswelle schwingen kann, wobei die periodisch variierende Winkelgeschwindigkeit der Abtriebswelle zwischen dem Wert 0 und der maximalen Amplitude justiert werden kann, da das erste konische Zahnrad (34) an der genannten justierbaren Welle (32) befestigt ist, das genannte erste konische Zahnrad (34) greift in ein entsprechendes zweites konisches Zahnrad (35), das im rechten Winkelzum ersten Zahnrad an der Abtriebswelle befestigt ist, da die genannte justierbare Welle radial ausgerichte Drehzapfen hat, die Bestandteil des Kreuzgelenkes sind, und womit die Justierung durch Antriebsmittel ausgeführt werden kann, dadurch dass das genannte Gehäuse (33.1), und damit die Achse der genannten justierbaren Welle, gedreht werden kann.

## Revendications

1. Mécanisme avec un arbre de transmission (1;37;57)et un arbre récepteur (2;28;38) et servant à transformer une rotation avec une vitesse angulaire constante en une rotation avec une vitesse angulaire périodiquement variable, constitué par :
Deux croisillons de joint à cardan hétérocinétiques à couplage série et une pièce réglable (4;39;43) qui est élément de sortie pour l'un des croisillons de joint à cardan et élément d'entrée pour l'autre croisillon de joint à cardan, ladite pièce réglable est placée de telle manière que son arbre soit orientable entre une amplitude maximale et l'amplitude 0, lorsque ladite pièce réglable est équipée de pivots de direction radiale (8;8') ou de roulements pour les pivots (7;7') qui font partie du premier et second croisillon de joint à cardan, ladite pièce réglable est la partie rotative d'un roulement (9;40') dont la partie non-rotative (10,16;16,44,45) est suspendue de manière pivotable en roulements (17;45.1) pour que l'ajustage puisse se faire,
Les moyens actionnants sont dépendants des moyens auxquels les arbres pour lesdits pivots (8;8') ou des roulements pour les pivots (7;7') pour le second ou le premier croisillon de joint à cardan sont tournés dans un angle divergent de jusqu'à 90° inclus, en même temps que les pivots d'arbre pour chacun des croisillons de joint à cardan sont tournés chacun dans un autre angle l'un par rapport à l'autre, qui peut être 90° avec bénéfice, afin que les amplitudes de vitesse angulaire pour les deux croisillons de joint à cardan soient cumulées, **caractérisé en ce que** ledit arbre récepteur (2;28;38) ne passe pas par ladite pièce réglable (4;39,43).

2. Mécanisme, selon la revendication 1, **caractérisé en ce que** l'arbre de transmission et l'arbre récepteur aient des arbres coïncidents, l'arbre de transmission (1) passe par l'arbre récepteur et est équipé de pivots orientés de manière radiale (6) ou équipé de boules (55), connectées à un anneau entourant (3;56), lequel, avec les pivots orientés de manière radiale (7), est connecté à ladite pièce réglable (4) qui est égale aux moyens mentionnés sous forme d'une pièce au milieu (4) en forme d'anneau entourant lorsque les pivots (8) et les roulements pour les pivots (7) sont dirigés de manière droite l'un à l'autre et font partie du premier croisillon de joint à cardan; ladite pièce réglable (4) est connectée à l'aide de pivots orientés de manière radiale (8) à un anneau entourant (5), lequel avec des pivots orientés de manière radiale (5'), est connectée à un anneau entourant (2), qui constitue ledit arbre récepteur, lorsque les pivots (8 et 5') sont dirigés de manière droite l'un à l'autre et font partie du second croisillon de joint à cardan.

3. Mécanisme selon une des revendications précédentes, **caractérisé en ce que** ladite pièce non-rotative (10,16) du roulement mentionné (9) soit suspendue de manière oscillante dans des roulements (17) autour de l'axe de l'arbre de transmission et autour de l'axe de l'arbre récepteur à l'aide de roulements (18') sur un anneau extérieur (18) qui est concentrique de l'arbre de transmission et qui s'étend sur l'arbre récepteur et ladite pièce non-rotative; ledit anneau extérieur (18) est rotatif à l'aide des moyens actionnants sous forme d'un treuil (19) pour qu'un déphasage de l'amplitude soit réglable, et ledit anneau extérieur (18) est attaché aux moyens par des crabots (21) qui s'accrochent dans des rainures (22) dans un logement cylindrique et stationnaire entourant (23).

4. Mécanisme selon la revendication 3, **caractérisé en ce que** ladite pièce non-rotative (10,16) du roulement (9) contienne une coupole (10) avec un endroit dégagé (15) qui n'est pas touché par l'anneau entourant (5) cet endroit dégagé est le lieu de fixage pour une partie saillante (16) de la pièce non-rotative qui constitue lesdits moyens actionnants, et comprend une ouverture de rainure (14), ladite coupole est équipée d'un ou plusieurs pivots orientés de manière radiale (11,12,12.1,13) placés au plan médian de l'ouverture de rainure ou à côté.

5. Mécanisme selon la revendication 4, **caractérisé en ce que** les pivots de ladite coupole saisissent une gorge (24,24.1,24.2,24.4) faite en rail de roulement (25,25.1) qui est concentrique de l'arbre de transmission (1) et rotatif autour de celui-ci par le moyen en crabot (27) de manière contrôlable, et qui s'étend autour de ladite pièce non-rotative.

6. Mécanisme selon une des revendications 2-5, **caractérisé en ce que** l'anneau (2) soit rallongé en une extrémité massive (28) qui constitue l'arbre récepteur opposé à l'arbre de transmission (1), qui finit au roulement dans l'anneau (2, illustration 24).

7. Mécanisme selon une des revendications précédentes, **caractérisé en ce que** l'anneau (3) soit développé en forme de sphère pour obtenir plus d'efficacité.

8. Mécanisme selon la revendication 1, pour usage avec traction d'arbre à cardan, **caractérisé en ce que** l'arbre de transmission (37) et l'arbre récepteur (38) soient placés parallèlement l'un à l'autre, chaque arbre est relié à un engrenage conique(40,41) perpendiculaire en engrenage et avec le croisillon de joint à cardan, ledit engrenage conique (40,41) est placé dans une boîte de roulement pivotant (45,44) respectivement autour de l'arbre de transmission et de l'arbre récepteur, pour qu'un ajustement de la vitesse angulaire periodique et un déphasage de l'amplitude puissent se faire entre les deux arbres (37,38), lorsque le déphasage s'effectue par un pivotement de la boîte de roulement (45) autour de l'arbre de transmission (37) et lorsque la pièce réglable est un arbre à nervure (39,43, illustration 26), quatre engrenages coniques l'un vis-â-vis de l'autre peuvent être utilisés avec bénéfice.

9. Mécanisme selon la revendication 2, **caractérisé en ce que** l'arbre de transmission (57) soit connecté à l'anneau entourant mentionné (56) par deux boules placées diamétralement (55) dans des gorges en travers du plan médian de l'anneau et décalées de 90° sur l'anneau (56), le changement ne concerne que l'accouplement entre l'arbre de transmission et l'anneau et des boules équivalentes entre l'anneau et un anneau extérieur de celui-ci, lorsque lesdites boules sont mises en mouvement de direction longitudinale sur l'arbre de transmission (illustration 27).

10. Un mécanisme avec un arbre-manivelle de transmission (30) et un arbre récepteur (38) placés de manière perpendiculaire, et servant à transformer une rotation avec une vitesse angulaire constante en une rotation avec une vitesse angulaire périodiquement variable, constitué par un croisillon de joint à cardan qui relie l'arbre-manivelle (30) à un arbre réglable (32) qui est élément de sortie d'un des croisillons de joint à cardan mentionnés et qui est réglable variablement en tournant le boîtier (33.1) autour du roulement (33), par quoi l'axe de l'arbre réglable peut être tourné d'équerre entre l'arbre de transmission et l'arbre récepteur, par quoi la vitesse angulaire périodiquement variable de l'arbre récepteur est réglable entre 0 et l'amplitude maximale, lorsque le premier engrenage conique (34) est connecté à l'arbre réglable mentionné (32), ledit premier engrenage conique (34) est en engrenage avec un autre engrenage conique semblable (35) qui est connecté à l'abre récepteur perpendiculairement au premier engrenage conique, lorsque ledit arbre réglable a des pivots dirigés de manière radiale qui font partie du croisillon de joint à cardan, et lorsque l'ajustage peut s'effectuer par des moyens actionnants auxquels ledit boîtier (33.1) et alors l'axe de l'arbre réglable mentionné peuvent être tournés.
